# EUROPEAN PATENT APPLICATION

(11) **EP 3 246 291 A1**
(43) Date of publication of application: **22.11.2017**
(21) Application number: 16737210.1
(22) Date of filing: 14.01.2016
(51) Int. Cl.: C02F 3/00, C02F 3/30, H01M 8/16, H01M 4/90, H01M 4/86, H01M 4/96

(54) **MICROBIAL FUEL CELL SYSTEM**

(30) Priority: 15.01.2015 JP 2015005992
(71) Applicant: Panasonic Corporation, Kadoma-shi, Osaka 571-8501 (JP)
(72) Inventor: SUZUKI, Yuya, Osaka-shi, Osaka 540-6207 (JP); USUI, Hiroaki, Osaka-shi, Osaka 540-6207 (JP); KITADE, Yuuki, Osaka-shi, Osaka 540-6207 (JP); YOSHIKAWA, Naoki, Osaka-shi, Osaka 540-6207 (JP); KAMAI, Ryo, Osaka-shi, Osaka 540-6207 (JP)
(74) Representative: Müller-Boré & Partner Patentanwälte PartG mbB
(86) International application number: PCT/JP2016/000162
(87) International publication number: WO 2016/114139

(57) **Abstract**

A microbial fuel cell system (100) includes a supply-drain compartment (6) having a supply port (61) and a drain port (62) of an electrolytic solution (2). The microbial fuel cell system further includes one or more power generation cassettes (10) provided in the supply-drain compartment and each including a microbial fuel cell (1) including: a positive electrode (4) including a first water-repellent layer (41) in contact with a gas phase and a gas diffusion layer (42) attached to the first water-repellent layer; and a negative electrode (3) holding anaerobic microorganisms. The microbial fuel cell system includes one or more purifying cassettes (20) provided in the supply-drain compartment and each including a second water-repellent layer (11) in contact with the gas phase. The power generation cassettes are arranged in the supply-drain compartment on the upstream side in a direction in which the electrolytic solution flows from the supply port toward the drain port, and the purifying cassettes are arranged on the downstream side of the power generation cassettes.

## Description

### TECHNICAL FIELD

The present invention relates to microbial fuel cell systems. More particularly, the present invention relates to a microbial fuel cell system with improved performance of organic matter treatment.

### BACKGROUND ART

Microbial fuel cells convert chemical energy of organic matter contained in wastewater into electrical energy through a catalytic reaction of microorganisms (metabolism, biochemical conversion), and oxidize and reduce the organic matter. Such microbial fuel cells produce the electrical energy directly from the organic matter by the action of microorganisms. The microbial fuel cells are therefore expected to improve energy recovery efficiency compared with conventional energy recovery systems that go through a process of converting organic matter into biogas for energy recovery. Such microbial fuel cells are utilized not only for power generation but also for wastewater treatment, organic waste treatment, and incidental facilities for organic waste treatment.

A microbial fuel cell includes a negative electrode holding microorganisms and a positive electrode brought into contact with an oxidizing agent, for example. In recent years, this type of microbial fuel cell including a gas diffusion electrode as a positive electrode is receiving increased attention (for example, Patent Literature 1). Since such a gas diffusion electrode is porous, oxygen in a gas phase (such as an atmosphere) is supplied to the positive electrode. Accordingly, hydrogen ions and electrons produced in the negative electrode can react with the oxygen present in the gas phase in the positive electrode.

### CITATION LIST

### PATENT LITERATURE

Patent Literature 1: Japanese Unexamined Patent Application Publication No. 2010-102953

### SUMMARY OF INVENTION

As described in Patent Literature 1, since the positive electrode which is the gas diffusion electrode is porous, electrochemical reaction efficiency is significantly high in the positive electrode. On the other hand, the rate of treatment of the organic matter in the negative electrode tends to be slow because the electrochemical reaction in the negative electrode involves microorganisms, which may lead to insufficient oxidation treatment of the organic matter. Accordingly, there remains a need for further improvement of microbial fuel cells capable of exhibiting efficient organic matter treatment.

Gas diffusion electrodes are manufactured by use of high-cost materials so as to have gas diffusion performance, water repellency, and electrical conductivity. Thus, there is a need for gas diffusion electrodes manufactured at lower cost in view of industrial applicability.

The present invention has been made in view of the above-described conventional problems. An object of the present invention is to provide a microbial fuel cell system capable of efficiently performing oxidation treatment of organic matter and manufactured at lower cost.

In order to solve the problems described above, a microbial fuel cell system according to an aspect of the present invention includes a supply-drain compartment having a supply port and a drain port of an electrolytic solution. The microbial fuel cell system further includes at least one power generation cassette provided in the supply-drain compartment and including a microbial fuel cell including: a positive electrode including a first water-repellent layer in contact with a gas phase and a gas diffusion layer attached to the first water-repellent layer; and a negative electrode holding anaerobic microorganisms. The microbial fuel cell system also includes at least one purifying cassette provided in the supply-drain compartment and including a second water-repellent layer in contact with the gas phase. The at least one power generation cassette is arranged in the supply-drain compartment on the upstream side in a direction in which the electrolytic solution flows from the supply port toward the drain port, and the at least one purifying cassette is arranged on the downstream side of the power generation cassette.

### BRIEF DESCRIPTION OF DRAWINGS

[Fig. 1] Fig. 1 is a cross-sectional view showing a microbial fuel cell according to an embodiment of the present invention.
[Fig. 2] Fig. 2 is a side view showing a microbial fuel cell system according to an embodiment of the present invention.
[Fig. 3] Fig. 3 is a plan view showing the microbial fuel cell system according to the embodiment of the present invention.

### DESCRIPTION OF EMBODIMENTS

A microbial fuel cell system according to the present embodiment will be described in detail below. It should be noted that the features in the drawings are not necessarily drawn to scale, and may be arbitrarily enlarged and positioned to improve drawing legibility.

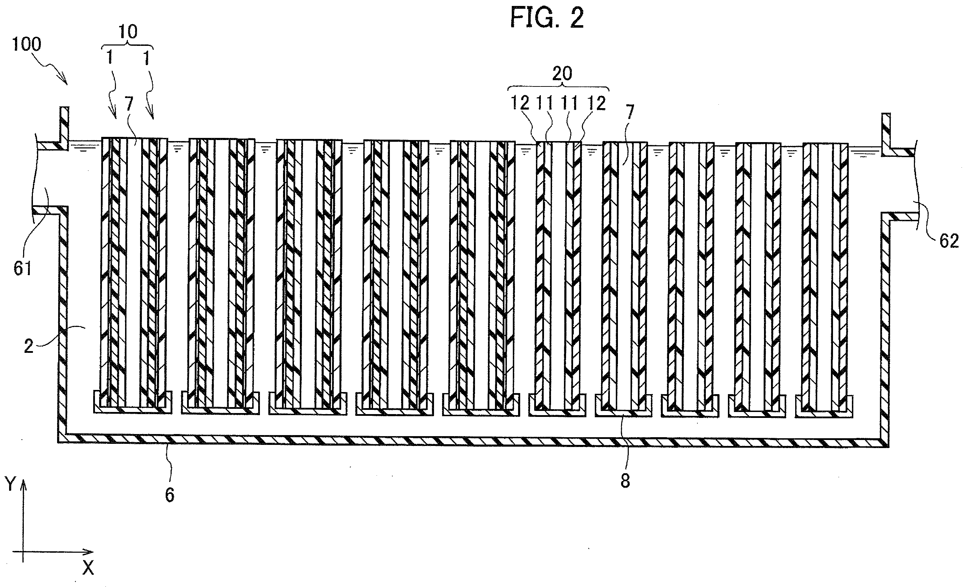

A microbial fuel cell system 100 according to the present embodiment includes a plurality of microbial fuel cells 1, as shown in Fig. 2. Each of the microbial fuel cells 1 includes a negative electrode 3, a positive electrode 4, and a separating membrane 5. In the microbial fuel cell 1, the negative electrode 3 is arranged in contact with one surface 5a of the separating membrane 5, and the positive electrode 4 is arranged in contact with the other surface 5b on the opposite side of the surface 5a of the separating membrane 5. A gas diffusion layer 42 of the positive electrode 4 is in contact with the separating membrane 5, and a first water-repellent layer 41 of the positive electrode 4 is exposed to the space 7 serving as a gas phase, as described below.

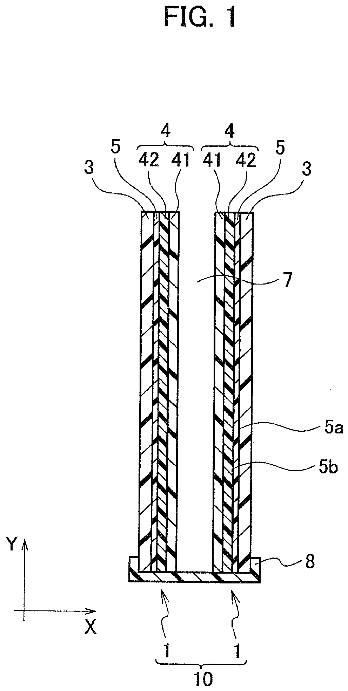

As shown in Fig. 1, two microbial fuel cells 1 are arranged such that the respective first water-repellent layers 41 are opposed to each other. The first water-repellent layer 41 of one of the microbial fuel cells 1 faces the first water-repellent layer 41 of the other microbial fuel cell 1 at a distance. A holding member 8 for holding a pair of first water-repellent layers 41 at a distance is provided on the bottom of the respective first water-repellent layers 41. Accordingly, the space 7 serving as a gas phase is provided between the two first water-repellent layers 41. The microbial fuel cell system 100 is configured such that the space 7 is open to the outside air, or air is externally supplied to the space 7 via a pump, for example.

The negative electrode 3 is formed into a thin plate and preferably contains at least one of carbon and platinum. The negative electrode 3 holds anaerobic microorganisms. The negative electrode 3 includes a first surface and a second surface on the opposite side of the first surface. The first surface is located toward the positive electrode 4 with the separating membrane 5 interposed therebetween, and the anaerobic microorganisms are held on the second surface. A biofilm including the anaerobic microorganisms is placed and fixed onto the second surface of the negative electrode 3, so that the anaerobic microorganisms are held by the negative electrode 3. A biofilm is, in general, a three-dimensional structure including a microbial colony and an extracellular polymeric substance (EPS) that the microbial colony produces. The anaerobic microorganisms are not necessarily held by the negative electrode 3 via the biofilm.

The anaerobic microorganisms held by the negative electrode 3 are preferably electricity-producing bacteria having an extracellular electron transfer mechanism, for example. Specific examples of anaerobic microorganisms include Geobacter, Shewanella, Aeromonas, Geothrix, and Saccharomyces.

The separating membrane 5 may include any configuration and material that can allow hydrogen ions to move between the negative electrode 3 and the positive electrode 4. The separating membrane 5 may be a proton conductive membrane such as a cation exchange membrane and an anion exchange membrane. The separating membrane 5 may be a membrane that has sequential spaces therein, such as a nonwoven fabric, a glass fiber film, or filter paper, so that hydrogen ions can move from the negative electrode 3 to the positive electrode 4.

The separating membrane 5 is preferably an ion exchange membrane or a solid electrolyte membrane, for example. The separating membrane 5 may be a fluororesin ion exchange membrane having proton conductivity, such as Nafion (registered trademark, available from DuPont Company) and Flemion (registered trademark, available from Asahi Glass Co., Ltd.).

The positive electrode 4 is formed into a thin plate as in the case of the negative electrode 3, and is a gas diffusion electrode including the first water-repellent layer 41 and the gas diffusion layer 42 in close contact with the first water-repellent layer 41. The use of the gas diffusion electrode facilitates the supply of oxygen contained in the gas phase. The present embodiment has the advantage as described below, as compared with a case in which dissolved oxygen dissolved in water is supplied to the positive electrode. When dissolved oxygen is supplied to the positive electrode 4, the rate of oxidation and power generation of organic matter contained in a liquid to be treated such as wastewater is limited due to the diffusion rate of the dissolved oxygen. The present embodiment can exhibit efficient oxidation and power generation of organic matter because the diffusion rate of the oxygen present in the gas phase is significantly faster than the diffusion rate of the dissolved oxygen. Accordingly, the output of the fuel cell can be improved.

The first water-repellent layer 41 has both water repellency and gas permeability. The first water-repellent layer 41 is configured to allow gas to move from the gas phase to the liquid phase in the electrochemical system in the microbial fuel cell 1, while separating the gas phase from the liquid phase in a favorable state. In particular, the first water-repellent layer 41 allows the oxygen in the gas phase in the space 7 to pass therethrough to reach the gas diffusion layer 42. The first water-repellent layer 41 is preferably a porous layer. The porous first water-repellent layer 41 can ensure high gas permeability.

The gas diffusion layer 42 preferably includes an electrically conductive porous material and a catalyst supported on the electrically conductive material, for example. Alternatively, the gas diffusion layer 42 may be a porous catalyst having electrical conductivity.

In the present embodiment, the first water-repellent layer 41 of the positive electrode 4 is located toward the space 7, as described above. The surface of the first water-repellent layer 41 on the opposite side of the surface toward the gas diffusion layer 42 is exposed to the external gas phase in a supply-drain compartment 6. The oxygen in the gas phase thus can be supplied to the gas diffusion layer 42 through the first water-repellent layer 41. The gas diffusion layer 42 of the positive electrode 4 is in contact with the separating membrane 5 and is arranged toward the negative electrode 3 with the separating membrane 5 interposed therebetween.

A gap may be provided between the positive electrode 4 and the separating membrane 5, and a gap may be provided between the negative electrode 3 and the separating membrane 5.

The microbial fuel cell 1 is in a closed circuit state when the electrolytic solution 2 is supplied to the supply-drain compartment 6 and when the negative electrode 3 and the positive electrode 4 are connected to an external circuit, as described below. The organic matter in the electrolytic solution 2 is decomposed due to the metabolism of anaerobic microorganisms, so that electrons, protons, and carbon dioxide are produced in the negative electrode 3. The produced electrons flow to the external circuit from the negative electrode 3, and the produced protons reach the positive electrode 4 through the separating membrane 5. The oxygen supplied to the positive electrode 4 from the gas phase is reduced by reacting with the protons and electrons, so as to produce water. This electrochemical reaction produces electromotive force between the positive electrode 4 and the negative electrode 3 and decomposes the organic matter in the electrolytic solution 2. The microbial fuel cell 1 can implement both the power generation and the decomposition treatment of the organic matter in the electrolytic solution 2 accordingly.

The microbial fuel cell system 100 includes a power generation cassette 10 including a pair of microbial fuel cells 1 arranged such that the respective first water-repellent layers 41 are opposed to each other, as described above. As shown in Fig. 2, the microbial fuel cell system 100 includes the supply-drain compartment 6 provided with a supply port 61 and a drain port 62 of the electrolytic solution 2, and a plurality of power generation cassettes 10 housed in the supply-drain compartment 6 filled with the electrolytic solution 2. The space 7 in the power generation cassette 10 is not filled with the electrolytic solution 2 but exposed to the outside air, so as to supply the air to the first water-repellent layers 41.

The microbial fuel cell system 100 further includes a purifying cassette 20 in which second water-repellent layers 11 are in contact with the gas phase. The purifying cassette 20 does not include the microbial fuel cells 1 included in the power generation cassette 10 but has a function to decompose the organic matter contained in the electrolytic solution 2. The purifying cassette 20 thus has both water repellency and gas permeability, includes the second water-repellent layers 11 in contact with the gas phase, and decomposes the organic matter contained in the electrolytic solution 2 with the oxygen passing through the second water-repellent layers 11.

As shown in Fig. 2, the purifying cassette 20 includes two second water-repellent layers 11 facing each other at a distance and the holding member 8 on the bottom to hold the second water-repellent layers 11 separately from each other, so as to provide the space 7 serving as a gas phase therein. As in the case of the power generation cassette 10, the space 7 in the purifying cassette 20 is not filled with the electrolytic solution 2 but exposed to the outside air, so as to supply the air to the second water-repellent layers 11. The purifying cassette 20, however, may have any structure which can decompose the organic matter in the electrolytic solution 2 while being in contact with the gas phase. For example, the purifying cassette 20 may be obtained such that the peripheries of the two second water-repellent layers 11 are attached to each other to be formed into a bag-like shape open on the upper side, so as to provide the space 7 therein.

As shown in Fig. 2, the microbial fuel cell system 100 includes a plurality of power generation cassettes 10 and purifying cassettes 20 aligned in the stacking direction X perpendicular to the vertical direction Y inside the supply-drain compartment 6. The power generation cassettes 10 are arranged in the supply-drain compartment 6 on the upstream side in a direction in which the electrolytic solution 2 flows from the supply port 61 toward the drain port 62, and the purifying cassettes 20 are arranged on the downstream side of the power generation cassettes 10.

In the microbial fuel cell system 100, the electrolytic solution 2 is supplied from the supply port 61 of the supply-drain compartment 6, brought into contact with the power generation cassettes 10 and the purifying cassettes 20, and discharged from the drain port 62. The concentration of the organic matter in the electrolytic solution 2 is high and the biochemical oxygen demand (BOD) is large around the supply port 61. On the other hand, the concentration of the organic matter in the electrolytic solution 2 is low and the biochemical oxygen demand (BOD) is small around the drain port 62 due to the effects of the power generation cassettes 10 and the purifying cassettes 20.

A rate of organic matter treatment in the negative electrode 3 of the microbial fuel cell 1 tends to be slow because the electrochemical reaction in the negative electrode 3 involves microorganisms, as described above. When the microbial fuel cell system 100 only includes the power generation cassettes 10 in the supply-drain compartment 6, the organic matter may remain in the electrolytic solution discharged from the microbial fuel cell system 100 because of insufficient decomposition of the organic matter. In addition, the microbial fuel cell system 100 only including the power generation cassettes 10 in the supply-drain compartment 6 increases the cost of production because the number of the high-cost gas diffusion electrodes used as the positive electrodes 4 increases. Further, the amount of the organic matter contained in the electrolytic solution 2 is smaller on the downstream side than on the upstream side in the supply-drain compartment 6 because of the action of decomposing the organic matter by the aligned power generation cassettes 10. As a result, the materials included in the power generation cassettes 10 located on the downstream side may be used insufficiently, and the power generation efficiency of the power generation cassettes 10 on the downstream side decreases.

In the present embodiment, the power generation cassettes 10 are arranged on the upstream side of the supply-drain compartment 6 containing a larger amount of organic matter, and the purifying cassettes 20 are arranged on the downstream side containing a smaller amount of organic matter. The power generation cassettes 10 on the upstream side thus efficiently decompose a large amount of organic matter, and the purifying cassettes 20 on the downstream side decompose the remaining organic matter not decomposed by the power generation cassettes 10. The purifying cassettes 20 not including the gas diffusion electrodes are manufactured at lower cost than the power generation cassettes 10. Accordingly, the present embodiment can decrease the number of the high-cost gas diffusion electrodes to lower the cost of production, while efficiently decomposing the organic matter contained in the electrolytic solution 2.

As described above, the respective purifying cassettes 20 include the second water-repellent layers 11 in contact with the gas phase. In order to further promote the decomposition of the organic matter contained in the electrolytic solution 2, a holding body 12 holding aerobic microorganisms is preferably attached to each second water-repellent layer 11 in the purifying cassette 20. The holding body 12 is preferably placed on the surface of the second water-repellent layer 11 toward the electrolytic solution 2. The use of the holding body 12 holding aerobic microorganisms can efficiently decompose the remaining organic matter on the downstream side where the concentration of the organic matter contained in the electrolytic solution 2 decreases. Since the holding body 12 is attached to the surface of the second water-repellent layer 11 having oxygen permeability, oxygen can sufficiently be supplied to the aerobic microorganisms through the second water-repellent layer 11 so as to cultivate the aerobic microorganisms.

The aerobic microorganisms may be any microorganisms that have metabolism derived from oxygen and can decompose the organic matter contained in the electrolytic solution 2. Examples of aerobic microorganisms include Escherichia coli, Pseudomonas aeruginosa, and Bacillus subtilis. The holding body 12 for holding the aerobic microorganisms may have a nonwoven or sponge-like structure. The holding body 12 may be formed of at least one material selected from the group consisting of polyethylene, polypropylene, polyethylene glycol, polyurethane, and polyvinyl alcohol.

The microbial fuel cell system 100 according to the present embodiment preferably includes a plurality of power generation cassettes 10. A current density of the power generation cassette 10 located on the most downstream side in the supply-drain compartment 6 is 20% or greater of the maximum current density of the power generation cassette 10 having the highest current density generated among the power generation cassettes 10. In other words, the power generation cassettes 10 with the current density of less than 20% are replaced with the purifying cassettes 20. The power generation cassettes 10 with the current density of less than 20% have low power generation efficiency, and the materials included in the power generation cassettes 10 are not used efficiently. The present embodiment replaces the power generation cassettes 10 having a lower current density with the purifying cassettes 20, so as to improve the efficiency of purifying the organic matter, while preventing the power generation performance of the entire microbial fuel cell system 100 from decreasing. As used herein, "the current density of the power generation cassette" represents a ratio of a current value of the power generation cassette to the area of the positive electrode of each power generation cassette ([current value of power generation cassette] / [area of positive electrode of each power generation cassette]). The area of the positive electrode 4 is a projected area when the negative electrode 3, the positive electrode 4, and the separating membrane 5 are projected in the stacking direction.

The following are examples of the actual power generation performance of the microbial fuel cell system 100. First, the microbial fuel cell 1 was prepared, using a positive electrode including a polytetrafluoroethylene (PTFE) layer (a first water-repellent layer) and carbon paper supporting a catalyst thereon (a gas diffusion layer), and a negative electrode including carbon felt holding anaerobic microorganisms. In addition, polyolefin nonwoven fabric was used as a separating membrane in the microbial fuel cell 1. Plural sets of power generation cassettes 10 including the microbial fuel cells 1 as shown in Fig. 1 were prepared. The microbial fuel cell system 100 was then prepared equipped with ten sets of power generation cassettes 10 in the supply-drain compartment 6, in a similar manner as shown in Fig. 2. Two sets of microbial fuel cell systems 100, namely, a microbial fuel cell system A and a microbial fuel cell system B were prepared.

The electrolytic solution 2 was supplied to each of the microbial fuel cell system A and the microbial fuel cell system B, and the current value of each power generation cassette 10 was measured, so as to obtain the current density of each power generation cassette 10. In the microbial fuel cell system A, the current density of each power generation cassette was measured at three different measurement points of time A1 to A3. Similarly, in the microbial fuel cell system B, the current density of each power generation cassette was measured at three different measurement points of time B1 to B3. In Table 1, the power generation cassette 10 of No. 1 is located on the most upstream side, the power generation cassettes 10 of No. 2 to No. 9 are arranged sequentially, and the power generation cassette 10 of No. 10 is located on the most downstream side. Table 1 shows relative values of the current densities of the power generation cassettes No. 2 to No. 10 with respect to the power generation cassette No. 1 readjusted to "100".

**[Table 1]**

| | | Relative Value of Current Density in Power Generation Cassette | | | | | | | | | |
|---|---|---|---|---|---|---|---|---|---|---|---|
| | | No.1 | No.2 | No.3 | No.4 | No.5 | No.6 | No.7 | No.8 | No.9 | No.10 |
| Microbial Fuel Cell System A | A1 | 100 | 109 | 110 | 112 | 113 | 113 | 106 | 61.0 | 14.8 | 14.6 |
| | A2 | 100 | 105 | 114 | 101 | 87.1 | 87.1 | 63.5 | 31.6 | 13.2 | 13.2 |
| | A3 | 100 | 106 | 119 | 128 | 123 | 98.9 | 67.4 | 42.5 | 24.3 | 16.5 |
| Microbial Fuel Cell System B | B1 | 100 | 101 | 107 | 107 | 76.4 | 44.2 | 32.7 | 21.0 | 15.1 | 13.8 |
| | B2 | 100 | 100 | 107 | 108 | 77.5 | 43.5 | 32.3 | 21.2 | 14.7 | 13.4 |
| | B3 | 100 | 99.2 | 108 | 109 | 78.3 | 41.7 | 32.9 | 21.4 | 14.6 | 14.0 |

As shown in Table 1, in the microbial fuel cell system A, the power generation cassettes 10 of No. 5 and No. 6 have te highest current density at the measurement point A1. The power generation cassettes 10 of No. 9 and No. 10 have the current density which is less than 20% of the highest current density detected in the respective power generation cassettes No. 5 and No. 6. The power generation cassette 10 of No. 3 has the highest current density at the measurement point A2. The power generation cassettes 10 of No. 9 and No. 10 have the current density which is less than 20% of the highest current density detected in the power generation cassette No. 3. The power generation cassette 10 of No. 4 has the highest current density at the measurement point A3. The power generation cassettes 10 of No. 9 and No. 10 have the current density which is less than 20% of the highest current density detected in the power generation cassette No. 4.

As shown in Table 1, in the microbial fuel cell system B, the power generation cassettes 10 of No. 3 and No. 4 have the highest current density at the measurement point B1. The power generation cassettes 10 of No. 8 to No. 10 have the current density which is less than 20% of the highest current density detected in the respective power generation cassettes No. 3 and No. 4. The power generation cassette 10 of No. 4 has the highest current density at the measurement points B2 and B3. The power generation cassettes 10 of No. 8 to No. 10 have the current density which is less than 20% of the highest current density detected in the power generation cassette No. 4.

In the microbial fuel cell system A, the power generation cassettes No. 9 and No. 10 with the current density of less than 20% of the highest current density are preferably replaced with the purifying cassettes 20. Similarly, in the microbial fuel cell system B, the power generation cassettes No. 8 to No. 10 are preferably replaced with the purifying cassettes 20.

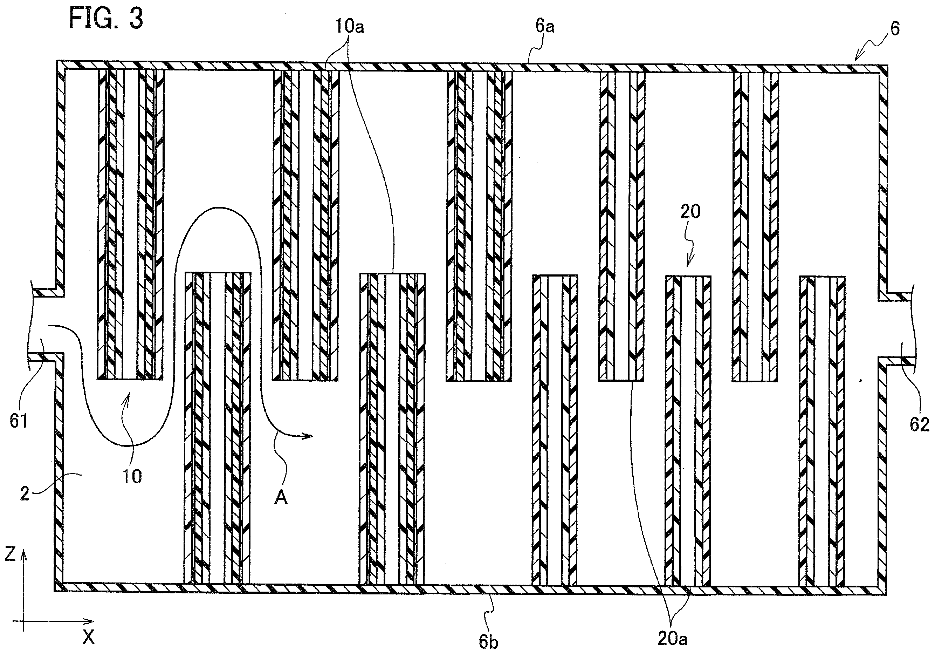

The power generation cassettes 10 and the purifying cassettes 20 of the present embodiment are preferably arranged such that the electrolytic solution 2 flows in a wavelike manner in the supply-drain compartment 6, as indicated by the arrow A shown in Fig. 3. More particularly, the plural power generation cassettes 10 and purifying cassettes 20 are aligned in the stacking direction X. The power generation cassettes 10 and the purifying cassettes 20 are arranged such that side surfaces 10a of the power generation cassettes 10 and side surfaces 20a of the purifying cassettes 20 are alternately in contact with the left wall 6a and the right wall 6b of the supply-drain compartment 6. The microbial fuel cell system 100 can increase the rate of contact between the electrolytic solution 2 and the negative electrodes 3 and the rate of contact between the electrolytic solution 2 and the second water-repellent layers 11 and the holding bodies 12 due to the wavelike flow of the electrolytic solution 2, so as to further improve the power generation efficiency and the purifying efficiency.

The first water-repellent layer 41 and the gas diffusion layer 42 of the positive electrode 4 according to the present embodiment are described in more detail below.

The first water-repellent layer 41 is preferably a porous body having water repellency, so that the first water-repellent layer 41 can have high gas permeability. The first water-repellent layer 41 is preferably formed of at least one material selected from the group consisting of polytetrafluoroethylene (PTFE), polydimethylsiloxane (PDMS), polyethylene (PE), and polypropylene (PP), for example.

The gas diffusion layer 42 may include an electrically conductive porous material and a catalyst supported on the electrically conductive material. The electrically conductive material of the gas diffusion layer 42 may include at least one material selected from the group consisting of a carbon substance, an electrically conductive polymer, a semiconductor, and metal. The carbon substance is a substance including carbon as a component. Examples of carbon substances include: graphite; activated carbon; carbon powder such as carbon black, VULCAN (registered trademark) XC-72R, acetylene black, furnace black, and Denka black; carbon fiber such as graphite felt, carbon wool, and carbon woven material; a carbon plate; carbon paper; and a carbon disc. Other examples may include materials having a microstructure such as carbon nanotube, carbon nanohorn, and carbon nanoclusters.

The electrically conductive polymer is a generic term for high molecular compounds having electrical conductivity. Examples of electrically conductive polymers include polymers each including a single monomer or two or more monomers, each of which is aniline, aminophenol, diaminophenol, pyrrole, thiophene, paraphenylene, fluorene, furan, acetylene, or derivatives of these compounds. More specific examples of electrically conductive polymers include polyaniline, polyaminophenol, polydiaminophenol, polypyrrole, polythiophene, polyparaphenylene, polyfluorene, polyfuran, and polyacetylene. The electrically conductive material made of metal may be stainless steel mesh. The electrically conductive material is preferably a carbon substance in view of availability, costs, corrosion resistance, and durability.

The electrically conductive material is preferably in the form of powder or fiber. The electrically conductive material may be supported by a supporting body. The supporting body is a member that has rigidity and allows the gas diffusion electrode to have a fixed shape. The supporting body may be either a non-conductive body or an electrically conductive body. When the supporting body is a non-conductive body, examples thereof include: glass; plastics; synthetic rubber; ceramics; waterproofing or water-repellent paper; a plant piece such as a wood piece; and an animal piece such as a bone piece or a shell. Examples of supporting bodies having a porous structure include porous ceramics, porous plastics, and a sponge. When the supporting body is an electrically conductive body, examples thereof include: a carbon substance such as carbon paper, carbon fiber, and a carbon stick; metal; and an electrically conductive polymer. When the supporting body is an electrically conductive body, the supporting body may function as a current collector obtained such that an electrically conductive material on which a carbon material is supported is provided on a surface of the supporting body.

The catalyst of the gas diffusion layer 42 is preferably a carbon material doped with metal atoms, for example. The metal atoms are preferably, but not limited to, atoms of at least one metal selected from the group consisting of titanium, vanadium, chromium, manganese, iron, cobalt, nickel, copper, zirconium, niobium, molybdenum, ruthenium, rhodium, palladium, silver, hafnium, tantalum, tungsten, rhenium, osmium, iridium, platinum, and gold. The carbon material including such metal atoms exhibits high performance as a catalyst particularly for enhancing an oxygen reduction reaction and an oxygen generation reaction. The amount of the metal atoms included in the carbon material may be determined as appropriate so that the carbon material exhibits high catalytic performance.

The carbon material is preferably further doped with atoms of at least one nonmetal selected from the group consisting of nitrogen, boron, sulfur, and phosphorus. The amount of the doped non-metal atoms may also be determined as appropriate so that the carbon material exhibits high catalytic performance.

The carbon material is obtained in a manner such that a carbon-based raw material, such as graphite or amorphous carbon, is used as a base, and the carbon-based raw material is doped with metal atoms and atoms of at least one nonmetal selected from the group consisting of nitrogen, boron, sulfur, and phosphorus.

Combinations of the doped metal atoms and non-metal atoms used for the carbon material are selected as appropriate. Particularly, the non-metal atoms preferably include nitrogen, and the metal atoms preferably include iron. The carbon material including these atoms can achieve significantly high catalytic activity. The non-metal atoms may only include nitrogen. The metal atoms may only include iron.

The non-metal atoms may include nitrogen, and the metal atoms may include at least one of cobalt and manganese. The carbon material including such atoms can also achieve significantly high catalytic activity. The non-metal atoms may only include nitrogen. The metal atoms may only include either cobalt or manganese, or may only include cobalt and manganese.

The carbon material may have any shape. For example, the carbon material may have a particle shape or a sheet-like shape. The carbon material having a sheet-like shape may have any size, and may be a minute material. The carbon material having a sheet-like shape may be a porous material. The porous carbon material having a sheet-like shape is preferably in the form of woven or non-woven fabric, for example. Such a carbon material can be used for the gas diffusion layer 42 without the electrically conductive material included.

The carbon material serving as a catalyst in the gas diffusion layer 42 may be produced as described below. First, a mixture of a non-metal compound including at least one nonmetal selected from the group consisting of nitrogen, boron, sulfur, and phosphorus, a metal compound, and a carbon-based raw material, is prepared. Thereafter, the mixture is heated at a temperature from 800°C or higher to 1000°C or lower for from 45 seconds or longer to shorter than 600 seconds to yield the carbon material serving as a catalyst.

As described above, graphite or amorphous carbon may be used for the carbon-based raw material. The metal compound may be any compound that includes metal atoms capable of being coordinated with non-metal atoms doped to the carbon-based raw material. The metal compound may be at least one compound selected from the group consisting of: an inorganic metal salt such as metal chloride, nitrate, sulfate, bromide, iodide, and fluoride; an organic metal salt such as acetate; a hydrate of an inorganic metal salt; and a hydrate of an organic metal salt. When graphite is doped with iron, for example, the metal compound preferably includes iron(III) chloride. When graphite is doped with cobalt, the metal compound preferably includes cobalt chloride. When the carbon-based raw material is doped with manganese, the metal compound preferably includes manganese acetate. The amount of the metal compound used is preferably determined, for example, such that the metal atoms are present in the metal compound in an amount of from 5% to 30% by mass, more preferably from 5% to 20% by mass, with respect to the carbon-based raw material.

The non-metal compound preferably includes at least one nonmetal selected from the group consisting of nitrogen, boron, sulfur, and phosphorus, as described above. The non-metal compound may be at least one compound selected from the group consisting of pentaethylenehexamine, ethylenediamine, tetraethylenepentamine, triethylenetetramine, ethylenediamine, octylboronic acid, 1,2-bis(diethylphosphino)ethane, triphenyl phosphite, and benzyl disulfide. The amount of the non-metal compound used is determined as appropriate depending on the amount of the doped non-metal atoms applied to the carbon-based raw material. The amount of the non-metal compound used is preferably determined such that a molar ratio of the metal atoms in the metal compound and the non-metal atoms in the non-metal compound is in the range from 1:1 to 1:2, more preferably in the range from 1:1.5 to 1:1.8.

When the carbon material serving as a catalyst is prepared, the mixture of the non-metal compound, the metal compound, and the carbon-based raw material is obtained as described below. First, the carbon-based raw material, the metal compound, and the non-metal compound are mixed, and a solvent such as ethanol is added to the mixture as necessary, so as to adjust the total mixture amount. These materials are dispersed by an ultrasonic dispersion method. The dispersed product is heated at an appropriate temperature (for example, 60°C), and then dried so as to remove the solvent to yield the mixture including the non-metal compound, the metal compound, and the carbon-based raw material.

Subsequently, the mixture thus obtained is heated under a reduction atmosphere or an inert gas atmosphere. The carbon-based raw material is thus doped with the non-metal atoms, and further doped with the metal atoms when the non-metal atoms and the metal atoms are coordinated with each other. The heating temperature is preferably in the range from 800°C or higher to 1000°C or lower, and the heating time is preferably in the range from 45 seconds or longer to less than 600 seconds. Since the heating time is short, the carbon material is produced efficiently, and the catalytic activity of the carbon material is further enhanced. The heating rate of the mixture at the beginning of heating in the heating process is preferably 50°C/second. This rapid heating further increases the catalytic activity of the carbon material.

The carbon material may further be subjected to acid cleaning. For example, the carbon material may be dispersed in pure water with a homogenizer for 30 minutes, added in 2M sulfuric acid, and then stirred at 80°C for 3 hours. This process minimizes elution of the metal components from the carbon material.

The production method described above allows the carbon material to have high electrical conductivity in which the amounts of inert metal compound and metal crystals are significantly reduced.

As described above, the microbial fuel cell system 100 according to the present embodiment includes the supply-drain compartment 6 having the supply port 61 and the drain port 62 of the electrolytic solution 2. The microbial fuel cell system 100 also includes one or more power generation cassettes 10 including the microbial fuel cells 1 and provided in the supply-drain compartment 6. Each of the microbial fuel cells 1 includes the positive electrode 4 including the first water-repellent layer 41 in contact with the gas phase and the gas diffusion layer 42 attached to the first water-repellent layer 41, and the negative electrode 3 holding anaerobic microorganisms. The microbial fuel cell system 100 further includes one or more purifying cassettes 20 including the second water-repellent layers 11 in contact with the gas phase and provided in the supply-drain compartment 6. In the supply-drain compartment 6, the power generation cassettes 10 are arranged on the upstream side in the direction in which the electrolytic solution 2 flows from the supply port 61 toward the drain port 62, and the purifying cassettes 20 are arranged on the downstream side of the power generation cassettes 10. The entire microbial fuel cell system can therefore be prevented from a decrease in power generation performance, since the power generation cassettes 10 are not arranged on the downstream side where the power generation performance tends to decrease. Further, the entire cost can be reduced, since the amount of the electrode materials used for the power generation cassettes can be reduced.

Each power generation cassette 10 shown in Fig. 1 to Fig. 3 is arranged such that the respective first water-repellent layers 41 of the two microbial fuel cells 1 are opposed to each other. However, the power generation cassettes 10 of the present embodiment are not limited to this configuration. For example, each power generation cassette 10 may include a single microbial fuel cell 1 in which the space 7 to which air can be supplied is provided toward the first water-repellent layer 41.

While the present embodiment has been described above, the present embodiment is not intended to be limited to the descriptions thereof, and various modifications will be made within the scope of the present embodiment. The microbial fuel cell system according to the present embodiment may be used for various kinds of treatment for liquid including organic matter and a nitrogen-containing compound, such as wastewater produced from various types of industrial factories, and organic wastewater such as sewage sludge. Further, the microbial fuel cell system may also be utilized for environmental improvement in waters.

The entire content of Japanese Patent Application No. P2015-005992 (filed on January 15, 2015) is herein incorporated by reference.

### INDUSTRIAL APPLICABILITY

The microbial fuel cell system according to the present invention includes the power generation cassettes arranged on the upstream side of the electrolytic solution and the purifying cassettes arranged on the downstream side. The purifying cassettes are provided on the downstream side where the power generation performance is decreased, instead of the power generation cassettes, so that the oxidation treatment of organic matter can be performed efficiently, while the power generation performance of the entire microbial fuel cell system can be prevented from decreasing. Further, the entire cost of production of the microbial fuel cell system can be reduced, since the amount of the electrode materials used for the power generation cassettes can be reduced.

### REFERENCE SIGNS LIST

- 1: MICROBIAL FUEL CELL
- 2: ELECTROLYTIC SOLUTION
- 3: NEGATIVE ELECTRODE
- 4: POSITIVE ELECTRODE
- 6: SUPPLY-DRAIN COMPARTMENT
- 10: POWER GENERATION CASSETTE
- 11: SECOND WATER-REPELLENT LAYER
- 12: HOLDING BODY
- 20: PURIFYING CASSETTE
- 41: FIRST WATER-REPELLENT LAYER
- 42: GAS DIFFUSION LAYER
- 61: SUPPLY PORT
- 62: DRAIN PORT
- 100: MICROBIAL FUEL CELL SYSTEM

## Claims

1. A microbial fuel cell system comprising:
a supply-drain compartment having a supply port and a drain port of an electrolytic solution;
at least one power generation cassette provided in the supply-drain compartment and including a microbial fuel cell including: a positive electrode including a first water-repellent layer in contact with a gas phase and a gas diffusion layer attached to the first water-repellent layer; and a negative electrode holding anaerobic microorganisms; and
at least one purifying cassette provided in the supply-drain compartment and including a second water-repellent layer in contact with the gas phase,
the at least one power generation cassette being arranged in the supply-drain compartment on an upstream side in a direction in which the electrolytic solution flows from the supply port toward the drain port, the at least one purifying cassette being arranged on a downstream side of the power generation cassette.

2. The microbial fuel cell system according to claim 1, wherein a holding body holding aerobic microorganisms is attached to the second water-repellent layer in the purifying cassette.

3. The microbial fuel cell system according to claim 1 or 2, wherein the gas diffusion layer includes an electrically conductive porous material and a catalyst supported on the electrically conductive material.

4. The microbial fuel cell system according to claim 3, wherein the catalyst is a carbon material doped with metal atoms.

5. The microbial fuel cell system according to any one of claims 1 to 4, wherein:
more than one power generation cassette is provided, and
a current density of the power generation cassette located on a most downstream side in the supply-drain compartment is 20% or greater of a maximum current density of another power generation cassette having a highest current density generated among the more than one power generation cassette.
